# EUROPÄISCHE PATENTSCHRIFT

(11) **EP 2 935 633 B1**
(45) Veröffentlichungstag und Bekanntmachung des Hinweises auf die Patenterteilung: **27.09.2017**
(21) Anmeldenummer: 13811143.0
(22) Anmeldetag: 09.12.2013
(51) Int. Cl.: C21C 5/35, C21C 5/46, C21C 5/52, F27D 21/02, F27D 19/00, C21C 5/30, G05B 19/418

(54) **VERFAHREN UND VORRICHTUNG ZUR VORHERSAGE, STEUERUNG UND/ODER REGELUNG VON STAHLWERKSPROZESSEN**
METHOD AND DEVICE FOR PREDICTING, CONTROLLING AND/OR REGULATING STEELWORKS PROCESSES
PROCÉDÉ ET DISPOSITIF DE PRÉDICTION, COMMANDE ET/OU RÉGLAGE DE PROCESSUS D'ACIÉRIE

(30) Priorität: 21.12.2012 DE 102012224184
(43) Veröffentlichungstag der Anmeldung: 28.10.2015
(73) Patentinhaber: SMS group GmbH, 40237 Düsseldorf (DE)
(72) Erfinder: UEBBER, Norbert, 40764 Langenfeld (DE); SCHLÜTER, Jochen, 44265 Dortmund (DE); ODENTHAL, Hans-Jürgen, 40822 Mettmann (DE); MORIK, Katharina, 50670 Köln (DE); BLOM, Hendrik, 44339 Dortmund (DE)
(74) Vertreter: Klüppel, Walter
(86) Internationale Anmeldenummer: PCT/EP2013/075907
(87) Internationale Veröffentlichungsnummer: WO 2014/095447

(56) Entgegenhaltungen:
- WO-A1-2013/034463
- HONGYUAN WEN ET AL: "<title>Combining SVM and flame radiation to forecast BOF end-point</title>", PROCEEDINGS OF SPIE, Bd. 7283, 11. Mai 2009 (2009-05-11), Seiten 728327-728327-4, XP055100463, ISSN: 0277-786X, DOI: 10.1117/12.828702
- Hong-Yuan Wen ET AL: "Converter end-point prediction model using spectrum image analysis and improved neural network algorithm", Optica Applicata, 1. Januar 2008 (2008-01-01), Seiten 693-704, XP055100503, Gefunden im Internet: URL:http://www.if.pwr.wroc.pl/~optappl/pdf /2008/no4/optappl_3804p693.pdf

## Beschreibung

### Technisches Gebiet

Die vorliegende Erfindung betrifft ein Verfahren zur Vorhersage, Steuerung und/oder Regelung von Stahlwerksprozessen, wie zum Beispiel Konverter- und Lichtbogenofenprozessen, welche zur Erzeugung schmelzflüssiger Stähle aus Einsatz- und Vormaterialien vorgesehen sind.

### Stand der Technik

Bei der Umwandlung von Einsatz- und Vormaterialien bei der Stahlerzeugung in Stahlwerksprozessen, wie zum Beispiel Konverter- und Lichtbogenofenprozessen, werden schmelzflüssige Stähle erzeugt, welche bestimmten Anforderungen genügen müssen.

Der Hauptumwandlungsprozess bei Konverterprozessen ist das Verringern des anfänglich hohen Kohlenstoffgehaltes auf niedrige Werte. Dies geschieht typischerweise mit Hilfe von eingeblasenem Sauerstoff über Lanzen oder Düsen am metallurgischen Gefäß. Neben diesem wesentlichen Ziel, den Kohlenstoffgehalt innerhalb der metallischen Schmelze zu verringern, gibt es weitere wesentliche Zielgrößen, nämlich einen bestimmten zu erreichenden Phosphor- oder Mangangehalt, sowie bestimmte Schmelzentemperaturen beim Abstich, wobei bevorzugt gleichzeitig ein optimierter Gehalt an Eisenoxid (FeO) in der Schlacke gewünscht wird, um metallurgische Prozesse zu fördern, ohne viel des Einsatzmaterials zu verbrennen beziehungsweise um Chromverluste bei der Entkohlung niedrig zu halten.

Weiterhin hat ein zu frühes oder zu spätes Beenden des Blasprozesses im Konverterprozess nachteilige Folgen. So ist bei einem zu frühen Beenden des Blasprozesses ein Nachblasen mit dem damit verbundenen Zeit- und Produktionsverlust erforderlich. Ein zu spätes Beenden des Blasprozesses führt zu hohem Eisenabbrand, Wartezeiten, Kühlmittelaufwand und einem erhöhten Feuerfestverschleiß und damit zu einer ineffizienten Produktion.

Bislang wurde der Blasendpunkt beziehungsweise der Abstichzeitpunkt im Konverterprozess mittels statischer oder dynamischer Modellrechnungen bestimmt. Dabei haben die entsprechenden Prozessmodelle im Wesentlichen die Aufgabe, nicht direkt messbare Betriebsparameter, wie beispielsweise die Temperatur der metallischen Schmelze sowie die chemische Zusammensetzung der Schmelze vorherzusagen. Die bekannten dynamischen Modellrechnungen basieren dabei auf Massen- und Energiebilanzen, welche den aktuellen Zustand der metallischen Schmelze im Konverter errechnen. Bei dynamischen Modellen wird weiterhin noch anhand des gemessenen Abgasverhaltens der Fortschritt der Entkohlung berechnet und hieraus die noch zu verblasende Sauerstoffmenge sowie der Blasendpunkt bestimmt.

Weiterhin ist es bekannt, den Blasendpunkt sowie den Abstichzeitpunkt mittels einer so genannten Sublanze zu bestimmen. Hierzu wird gegen Ende des jeweiligen Konverterprozesses eine Sonde in die metallische Schmelze eingeführt, um unmittelbar Temperatur und Zusammensetzung der Schmelze, beispielsweise bezüglich des Kohlenstoffgehaltes, des Phosphorgehaltes, des Mangangehaltes etc. zu bestimmen. Durch die auf diese Weise gewonnene höhere Sicherheit der Datenlage können deutlich einfachere Modelle verwendet werden und die Vorhersagengenauigkeit wird verbessert. Neben der so genannten Sublanze können auch so genannte "quick bombs", also nicht-lanzengebundene Tauchsonden verwendet werden, welche an einem Seil mit Messleitungen durch den Konvertermund in die Schmelze geworfen werden und die über einen bestimmten Zeitraum noch Messdaten nach außen liefern.

Ein weiteres bekanntes Verfahren zur Endpunktbestimmung sowie Abstichzeitpunktbestimmung wird über eine Abgasmessung durchgeführt, wobei hier konkret anhand des Kohlenmonoxid- beziehungsweise Kohlendioxidabgasanteiles, welcher sich mit fortschreitendem Entkohlungsfortschritt verändert, auf den Zustand der Schmelze geschlossen wird. Weiterhin wird mittels so genannten Lightmetern die am Ende des Prozesses nachlassende Leuchtkraft der Konverterflamme überwacht und daraus auf den Blasendpunkt geschlossen. Es handelt sich hierbei um empirisch ermittelte Werte, wobei bei Unterschreiten eines bestimmten CO, CO₂ oder Strahlungswertes dann auf einen bestimmten Kohlenstoff- oder Phosphorendgehalt geschlossen wird.

Nachteilig an der Verwendung von Sublanzen ist, dass diese im Unterhalt und der Anschaffung sehr teuer sind und die Bestimmung des Endpunktes durch den Einsatz der Sublanze auch noch nicht vollständig abschließend geklärt werden kann, da nach Bestimmung der Temperatur sowie der chemischen Zusammensetzung der Schmelze immer noch die bis zum Erreichen der vorgegebenen Werte für die Zielgrößen verbleibende Sauerstoffmenge beziehungsweise Blaszeit abgeschätzt werden muss. Außerdem muss der Prozess zur Sublanzenprobe unterbrochen werden.

Die Endpunktbestimmung auf Basis von Überwachung der Abgasgehalte, der Leuchtkraft der Konverterflamme und des Schwingungsverhaltens der Blaslanze sind weit verbreitet. Genutzt werden hier jedoch nur monokausale Zusammenhänge, also beispielsweise die Bestimmung der Zielgröße "Kohlenstoffgehalt" in der Schmelze in Abhängigkeit von den Einflussgrößen CO-oder CO₂-Gehalt im Abgas oder die Zielgröße "Phosphorgehalt" in der Metallschmelze abhängig von der Schwingungsintensität der Blaslanze. Dabei werden hier typischer Weise starre Grenzwerte verwendet, welche einem möglichen Driften der Messanordnung beziehungsweise Veränderungen des Anlagenverhaltens nicht Rechnung tragen.

Weiterhin besteht kein eindeutiger, lehrbuchmäßiger Zusammenhang zwischen der ausgewählten singulären Eingangsgröße und den erwarteten Zielgrößen. Dies wird entsprechend weder der Tatsache gerecht, dass die Endzustände der Konverterprozesse eine Folge vieler Einflussgrößen sind, nämlich beispielsweise abhängig von den Lanzenfahrweisen, der Bildung reaktionsfähiger Schlacken etc., noch der Tatsache, dass die Messung der jeweiligen Eingangsgrößen Veränderungen unterliegen, welche zu Fehldeutungen führen können. Beispielsweise können sich die Probenentnahmerohrleitungen der Abgasanalysesysteme über die Zeit hinweg zusetzen oder durch Änderungen im Abgassystem, beispielsweise durch unterschiedliche Stellringstellungen oder Druckreglungen im Abgassystem, können undefinierte Falschluftmengen angesaugt werden, welche den Zusammenhang zwischen dem Entkohlungsfortschritt und den gemessenen Abgasgehalt verfälschen können. Weiterhin besteht eine deutliche Zeitverzögerung zwischen der Probenentnahme und der Analyse, da die Gase noch gekühlt und gereinigt werden müssen.

In dem Aufsatz von Ling-Fei Xu, Quiezau et al "Signal spectrum endpoint predict of BOF with SVM", World Academie of Science, Engineering and Technology 62, 2010, Seiten 434 ff ist weiterhin beschrieben, einen Blasendpunkt in einem BOF-Konverter mittels einer Support Vector Machine (SVM), welche ein Algorithmus des maschinellen Lernens zur numerischen Vorhersage von Werten ist, zu bestimmen. Die Bestimmung wird in diesem Beispiel anhand der Leuchtkraft der Konverterflamme vorgenommen.

### Darstellung der Erfindung

Ausgehend von dem oben genannten Stand der Technik ist es eine Aufgabe der vorliegenden Erfindung, ein weiter verbessertes Verfahren zur Vorhersage, Steuerung und/oder Regelung von Konverterprozessen anzugeben.

Diese Aufgabe wird durch ein Verfahren mit den Merkmalen des Anspruchs 1 gelöst. Vorteilhafte Weiterbildungen ergeben sich aus den abhängigen Ansprüchen.

Entsprechend umfasst das Verfahren zur Vorhersage, Steuerung und/oder Regelung von Konverterprozessen die Schritte: Überwachen von mindestens zwei mit einer Zielgröße in Beziehung stehenden Eingangsgrößen, Ermitteln des Zusammenhanges zwischen den mindestens zwei Eingangsgrößen und mindestens einer Zielgröße mittels Regressionsanalyse oder Klassifikationsverfahren, und Verwenden der ermittelten Zielgröße zur Vorhersage, Steuerung und/oder Regelung des Stahlwerksprozesses.

Dadurch, dass aus mindestens zwei Eingangsgrößen mittels Regressionsanalyse oder Klassifikationsverfahren die Zielgröße ermittelt wird, beziehungsweise der Zusammenhang zwischen den Eingangsgrößen und den Zielgrößen mittels Regressionsanalyse oder Klassifikationsverfahren ermittelt wird, können die entsprechenden metallurgischen Prozesse genauer vorhergesagt werden und die Werte der Zielgrößen, welche für das jeweilige Produkt vorgegeben werden, beispielsweise die Abstichtemperatur und die chemische Zusammensetzung, können mit höherer Treffsicherheit erreicht werden.

Mehrere Eingangsgrößen können dabei auch in Beziehung zu mehreren Zielgrößen gesetzt werden, so dass insbesondere die Produkteigenschaften der Schmelze im Konverterprozess, beispielsweise die Abstichtemperatur, der Kohlenstoffendgehalt, der Phosphorendgehalt, der Eisengehalt der Schlacke etc. am Blasendpunkt simultan vorhergesagt werden können.

Darunter, dass zwei Eingangsgrößen mit jeweils einer Zielgröße in Beziehung stehen, wird verstanden, dass eine Veränderung der beiden Eingangsgrößen jeweils auf eine bestimmte Eigenschaft beziehungsweise Veränderung der Zielgröße schließen lässt. Beispielsweise kann über die Abgaszusammensetzung sowie die Strahlungsleistung der Konverterflamme der Kohlenstoffendgehalt der Schmelze bestimmt werden. Eine Schallmessung am Konverter in Kombination mit den Schwingungen der Blaslanze lässt einen Schluss auf den Phosphorendgehalt beziehungsweise den Eisenoxidgehalt in der Schlacke zu. Die Abstichtemperatur wiederum kann beispielsweise über die Abgastemperatur sowie über die gemessenen Verlustleistungen bestimmt werden.

Das Verfahren wird bevorzugt in Echtzeit ausgeführt, um eine zuverlässige Steuerung der jeweiligen Stahlwerksprozesse im Zeitablauf zu ermöglichen.

Bevorzugt wird zur Ermittlung der Zielgröße die SVM (Support Vektor Machine) Methode verwendet. Die SVM Methode kann sowohl zur Klassifizierung als auch zur Regression verwendet werden.
Da es sich zwischen den genannten Eingangsgrößen und den jeweiligen genannten Zielgrößen nicht um mittels Lehrbuchwissen festgelegte, eindeutige Zusammenhänge handelt, ist hier eine klassische Modellbildung nicht möglich. Mittels der SVM jedoch kann auf Grundlage der jeweiligen ermittelten Eingangsgrößen auf die Zielgröße geschlossen werden. Hierzu ist es natürlich notwendig, dass die SVM auf eine Datenbasis zurückgreifen kann, auf Grundlage derer die SVM den erforderlichen Lernvorgang durchführen kann. Dazu wird bevorzugt eine Vorverarbeitung der Eingangsgrößen durchgeführt, welche aus einer Kombination von statischen und dynamischen Eingangsgrößen, einer Transformation von dynamischen Eingangsgrößen und/oder einer Aggregation dynamischer, kombinierter und/oder transformierter Eingangsgrößen bestehen kann.

Weiterhin ist es vorteilhaft, wenn das SVM-Verfahren so durchgeführt wird, dass nach Abschluss eines jeweiligen Konverterprozesses die Abstichtemperatur sowie die chemische Zusammensetzung der Schmelze direkt gemessen werden und die gemessenen Zusammenhänge der SVM zur weiteren Verbesserung des Lernvorganges zur Verfügung gestellt werden.

Bevorzugt werden neben den dynamischen Eingangsgrößen, also beispielsweise Lanzenschwingungen, Abgaszusammensetzungen, Abgastemperatur, Schallpegel, Kühlwassertemperatur, Lanzenführung etc. auch statische Eingangsgrößen in dem SVM-Algorithmus verwendet. Diese statischen Eingangsgrößen sind beispielsweise das Konverteralter, das Lanzenalter, die Menge und die Art der Einsatz- und Zuschlagsmaterialien etc. Im Prinzip können mit dem SVM-Algorithmus beliebig viele Eingangsgrößen in Zusammenhang mit einer bestimmten Zielgröße gesetzt werden.

Unter statischen Eingangsgrößen sind hier Eingangsgrößen zu verstehen, welche zu diskreten Zeitpunkten gemessen beziehungsweise erhoben werden, wie beispielsweise die Einsatzgewichte oder die Analysen, oder aber diskrete Eigenschaften und Zustände der verwendeten Mittel, so wie beispielsweise ein Ausgangsverschleißzustand des Konverters und der Lanze.

Unter dynamischen Eingangsgrößen sind solche Eingangsgrößen zu verstehen, welche fortlaufend und im Wesentlichen kontinuierlich während des Konverterprozesses erfasst werden, so wie beispielsweise Abgastemperatur, Abgasanalyse, Schall- und Schwingungsmessungen etc.

Eine Verbesserung der Genauigkeit des Verfahrens kann beispielsweise dadurch erreicht werden, dass neben den jeweiligen real gemessenen Eingangsgrößen auch Ergebnisse von Modellrechnungen in die Vorhersageberechnungen des SVM-Verfahrens einfließen. Die SVM benötigt eine möglichst breite Datenbasis, auf deren Grundlage ein Zusammenhang zwischen den Eingangsgrößen und den jeweiligen Zielgrößen hergestellt werden kann. Mittels Modellrechnungen, welche bekannte Zusammenhänge zwischen Eingangsgrößen und Zielgrößen herstellen können, kann diese Datenbasis verbessert werden.

Um ein Driften der Messvorrichtungen auszugleichen, können beispielsweise die aktuellsten Eingangsgrößen und Messdaten stärker gewichtet werden. Bevorzugt werden Messdaten unterschiedlich gewichtet, um einer kontinuierlichen Veränderung der Messfehler der Messdaten entgegenzuwirken, bevorzugt entsprechend durch stärkere Gewichtung der aktuellsten Messdaten.

Weiterhin ist es bevorzugt, neben der genaueren Vorhersage des Blasendpunktes auch Zusammenhänge zwischen den Werten der Zielgrößen in der Schmelze und den jeweiligen Eingangsgrößen herzustellen, aus welchen sich beispielsweise Vorgaben für eine gezielte Beeinflussung der Endeigenschaften des Prozesses ableiten lassen, beispielsweise wie viel Heizmittel oder Kühlmittel zur Erzielung bestimmter Schmelzentemperaturen verwendet werden müssen.

Weiterhin ist es von Vorteil, wenn die aktuellsten Daten im Prozessverlauf dynamisch genutzt werden, um eine dynamische Anpassung der jeweils in der SVM gelernten Zusammenhänge an sich verändernde Randbedingungen, beispielsweise ein Altern des Konverters, anzupassen. Weiterhin werden beispielsweise die Abgasanalysen im BOF-Prozess, welche als Eingangsgröße bei dem SVM-Verfahren verwendet werden können, aufgrund von zunehmenden Staubanlagerungen innerhalb der entsprechenden Abgasführungsrohre beeinträchtigt. Durch eine kontinuierliche Anpassung der erlernten Zusammenhänge im SVM-Verfahren und durch die gleichzeitige Nutzung anderer Eingangsgrößen, wie beispielsweise die Lichtemission der Konverterflamme, welche ebenfalls im Zusammenhang mit dem Kohlenstoffgehalt der Schmelze steht, können entsprechende Verschiebungen einzelner Eingangsgrößen kompensiert werden.

Vorteilhaft ist es hier, dass sich das SVM-Verfahren in hohen Dimensionen betreiben lassen kann, es können also viele Eingangsgrößen berücksichtigt werden. Darüber hinaus kann das SVM-Verfahren auch auf nicht-lineare Probleme angewendet werden, so dass die Bestimmung des jeweiligen Blasendpunktes beziehungsweise die Vorhersage von Zielgrößen auch bei den im Wesentlichen nicht-linearen Prozessen im Konverter zuverlässig gelöst werden kann.

Bevorzugt kann zur Bestimmung des Kohlenstoffendgehalts der Schmelze die Abgaszusammensetzung sowie die Strahlungsleistung der Konverterflamme als dynamische Eingangsgröße verwendet werden. Zur Bestimmung des Phosphorendgehalts und/oder des Eisenoxidgehalts in der Schlacke kann der Schall am Konverter sowie die Schwingungen der Blaslanze als dynamische Eingangsgrößen verwendet werden. Zur Bestimmung der Abstichtemperatur kann die Abgastemperatur sowie die im Kühlsystem des Abgases repräsentierte Verlustleistung als dynamische Eingangsgrößen verwendet werden.

Weiterhin lässt sich das vorgeschlagene Verfahren auch für andere Zielgrößen als beispielsweise die Endeigenschaften der metallischen Schmelze nutzen. Beispielsweise kann die Neigung zum Schlackenauswurf beim BOF-Prozess als Zielgröße bestimmt werden und durch die simultane Überwachung der hier mit in Beziehung stehenden Messgrößen, wie beispielsweise Schallmessung, Lanzenschwingung, Abgasmessung etc. kann bei dynamischer Ermittlung von Kriterien, welche Gegenmaßnahmen erforderlich machen, bei genauer Berücksichtigung von Randbedingungen, also beispielsweise im Siliziumgehalt des Roheisens, minderwertigen Schrottsorten etc., zu zuverlässigen und genauen Vorhersagen führen.

### Kurze Beschreibung der Figuren

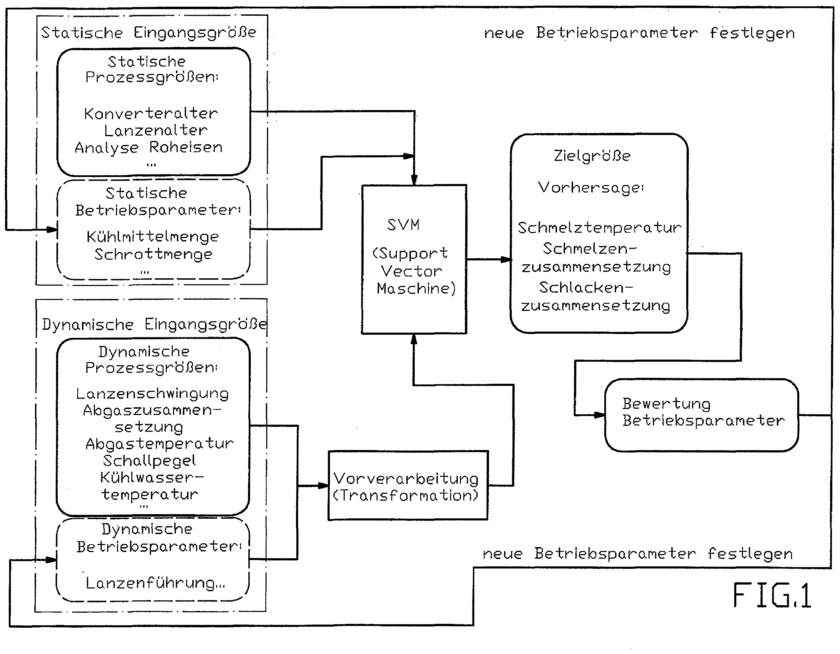

Bevorzugte weitere Ausführungsformen und Aspekte der vorliegenden Erfindung werden durch die nachfolgende Beschreibung der Figur näher erläutert. Dabei zeigt
- Figur 1: exemplarisch ein schematisches Flussdiagramm des vorliegenden Verfahrens.

### Detaillierte Beschreibung von Ausführungsbeispielen

Figur 1 zeigt schematisch ein Verfahren, welches den SVM-Algorithmus verwendet. Hierbei werden statische Eingangsgrößen in Form statischer Prozessgrößen, wie beispielsweise das Konverteralter, das Lanzenalter, eine Analyse des Roheisens, etc. bereitgestellt und dem SVM-Algorithmus zugeführt. Weiterhin werden auch statische Eingangsgrößen in Form von statischen Betriebsparametern, wie beispielsweise die Kühlmittelmenge, die Schrottmenge etc. bereitgestellt und dem SVM-Algorithmus zugeführt.

Weiterhin werden auch dynamische Eingangsgrößen in Form dynamischer Prozessgrößen, wie beispielsweise die Lanzenschwingungen, die Abgaszusammensetzung, Abgastemperatur, Schallpegel, Kühlwassertemperatur etc. dem SVM-Algorithmus, bevorzugt nach einem Vorverarbeitungsschritt, insbesondere einem Transformationsschritt, zugeführt. Weiterhin werden auch dynamische Eingangsgrößen in Form dynamischer Betriebsparameter, wie beispielsweise Lanzenführung etc. dem SVM-Algorithmus, bevorzugt nach einem Vorverarbeitungsschritt, insbesondere einem Transformationsschritt, zugeführt.

Mittels der SVM kann eine Vorhersage über eine Zielgröße getroffen werden, beispielsweise über die zu erwartende Schmelzentemperatur, die Schmelzenzusammensetzung und/oder die Schlackenzusammensetzung. Der Abstand zwischen gegebenen Sollwerten der Zielgrößen und der Prognose der Zielgrößen kann als eine zu optimierende Funktion verstanden werden. Diese Funktion kann mittels eines multikriteriellen Optimierungsverfahrens bezüglich der Betriebsparameter wie beispielsweise einer Heiz- oder Kühlmittelzugabe, der Lanzenführung sowie der Abschaltkriterien optimiert werden. Aus der Menge der ermittelten Betriebsparameter, welche zu den pareto-optimalen Lösungen geführt haben, kann dann eine Lösung ausgewählt werden und entsprechend damit neue Betriebsparameter festgelegt werden.

Unter Eingangsgrößen werden die während und nach dem Prozessablauf gemessenen beziehungsweise bestimmten Größen verstanden. Direkt messbare Größen sind beispielsweise über Sublanzen beziehungsweise "quick bombs" gemessene Temperaturen und Zusammensetzungen der metallischen Schmelze. Indirekte Eingangsgrößen sind Größen, welche auf eine Zielgröße schließen lassen, aber mit dieser nicht in einem Lehrbuchzusammenhang stehen, so wie beispielsweise der Schallpegel im Konverter, Vibrationen der Blaslanze, optische Messungen an der Konverterflamme, Abgasmessungen etc.

Eine Zielgröße ist eine solche Größe, welche eine Eigenschaft des Produktes angibt, welches mittels des Stahlwerksprozesses erreicht werden soll. Für unterschiedliche Metallschmelzen beziehungsweise unterschiedliche Anwendungsgebiete kann die Zielgröße unterschiedliche Werte annehmen. Zielgrößen sind beispielsweise die Abstichtemperatur sowie die chemischen Zusammensetzungen von Schmelze und Schlacke. Häufig sind auch mehrere Zielgrößen vorgesehen, welche derart optimiert werden sollen, dass eine Menge von pareto-optimalen Lösungen bestimmt wird, beispielsweise für eine Abstichtemperatur, den Kohlenstoffgehalt und den Phosphorgehalt der metallischen Schmelze.

Hier werden unter Betriebsparametern diejenigen Parameter verstanden, welche zur Führung, Steuerung und/oder Regelung des jeweiligen Stahlwerksprozesses verwendet werden. Hierzu zählen beispielsweise die Schrottzusammensetzung, der Startgehalt des Roheisenkohlenstoffs nach dem Einfüllen in das metallurgische Gefäß, die Verteilung der festen Einsatz- und Zuschlagsmaterialien im Konverter, die Kühlmittelzufuhr, die Energiezufuhr, die Blasdauer beim Konverterprozess, die Prozessdauer beziehungsweise der Abstichzeitpunkt, etc. Entsprechend handelt es sich bei den Betriebsparametern um reale Werte, mittels welchen der jeweilige metallurgische Prozess beziehungsweise der Stahlwerksprozess geführt werden kann beziehungsweise beeinflusst werden kann.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

## Patentansprüche

1. Verfahren zur Vorhersage, Steuerung und/oder Regelung von Stahlwerksprozessen, umfassend die Schritte:
- Überwachen von mindestens zwei mit einer Zielgröße in Beziehung stehenden Eingangsgrößen,
- Ermitteln des Zusammenhanges zwischen den mindestens zwei Eingangsgrößen und mindestens einer Zielgröße mittels Regressionsanalyse oder Klassifikationsverfahren, und
- Verwenden der ermittelten Zielgröße zur Vorhersage, Steuerung und/oder Regelung des Stahlwerksprozesses, wobei zur Ermittlung der Zielgröße die SVM (Support Vektor Machine) Methode verwendet wird und wobei der SVM sowohl statische Eingangsgrößen als auch dynamische Eingangsgrößen zur Verfügung gestellt werden.

2. Verfahren gemäß Anspruch 1, wobei das Verfahren in Echtzeit ausgeführt wird.

3. Verfahren gemäß Anspruch 1 oder 2, wobei mehrere Eingangsgrößen und eine geringere Anzahl von Zielgrößen mittels SVM Methode in Beziehung zueinander gebracht werden.

4. Verfahren gemäß einem der vorstehenden Ansprüche, wobei Ergebnisse von Modellrechnungen der SVM Methode zur Verfügung gestellt werden, bevorzugt zur Verbreiterung der Datenbasis.

5. Verfahren gemäß einem der vorstehenden Ansprüche, wobei eine Vorverarbeitung der Eingangsgrößen derart durchgeführt wird, dass statische und/oder dynamische Eingangsgrößen kombiniert werden, dynamische Eingangsgrößen transformiert werden und/oder dynamische, kombinierte und/oder transformierte Eingangsgrößen aggregiert werden.

6. Verfahren gemäß einem der vorstehenden Ansprüche, wobei Messdaten unterschiedlich gewichtet werden, um einer kontinuierlichen Veränderung der Messfehler der Messdaten entgegenzuwirken, bevorzugt durch stärkere Gewichtung der aktuellsten Messdaten.

7. Verfahren gemäß einem der vorstehenden Ansprüche, wobei zur Bestimmung des Kohlenstoffendgehalts der Schmelze die Abgaszusammensetzung sowie die Strahlungsleistung der Konverterflamme als dynamische Eingangsgröße verwendet wird.

8. Verfahren gemäß einem der vorstehenden Ansprüche, wobei zur Bestimmung des Phosphorendgehalts und/oder des Eisenoxidgehalts in der Schlacke der Schall am Konverter sowie die Schwingungen der Blaslanze als dynamische Eingangsgrößen verwendet werden.

9. Verfahren gemäß einem der vorstehenden Ansprüche, wobei zur Bestimmung der Abstichtemperatur die Abgastemperatur sowie die im Kühlsystem des Abgases repräsentierte Verlustleistung als dynamische Eingangsgrößen verwendet werden.

10. Verfahren gemäß einem der vorstehenden Ansprüche, wobei auf Grundlage der ermittelten Zielgröße über eine SVM Methode Betriebsparameter bestimmt werden.

## Claims

1. Method for prediction, control and/or regulation of steelworks processes, comprising the steps:
- monitoring at least two input variables related to a target variable,
- determining the correlation between the at least two input variables and at least one target variable by means of regression analysis or classification procedure, and
- using the determined target variable for prediction, control and/or regulation of the steelworks process, wherein for determination of the target variable use is made of the SVM (Support Vector Machine) method and wherein the SVM is made available not only for static input variables, but also dynamic input variables.

2. Method according to claim 1, wherein the method is carried in real time.

3. Method according to claim 1 or 2,wherein a plurality of input variables and a smaller number of target variables are brought into relationship with one another by means of an SVM method.

4. Method according to any one of the preceding claims, wherein results of model computations of the SVM method are made available, preferably for expanding the database.

5. Method according to any one of the preceding claims, wherein preliminary processing of the input variables is carried in such a way that static and/or dynamic input variables are combined, dynamic input variables are transformed and/or dynamic, combined and/or transformed input variables are aggregated.

6. Method according to any one of the preceding claims, wherein measurement data are differently weighted in order to counteract continuous change in measurement errors of the measurement data, preferably through stronger weighting of the most current measurement data.

7. Method according to any one of the preceding claims, wherein for determination of carbon content of the melt the exhaust gas composition as well as the radiation power of the converter flame are used as dynamic input variable.

8. Method according to any one of the preceding claims, wherein for determination of the phosphorous final content and/or the iron oxide content in the slag the sound at the converter and the oscillations of the blowing lance are used as dynamic input variables.

9. Method according to any one of the preceding claims, wherein for determination of the tapping temperature the exhaust gas temperature and the lost power represented in the cooling system of the exhaust gas are used as dynamic input variables.

10. Method according to any one of the preceding claims, wherein operating parameters are determined by way of an SVM method on the basis of the determined target variable.

## Revendications

1. Procédé pour la prévision, la commande et/ou le réglage de processus d'usine sidérurgique comprenant les étapes consistant à :
- surveiller au moins deux valeurs d'entrée en relation avec une valeur cible ;
- déterminer le rapport entre lesdites au moins deux valeurs d'entrée et au moins une valeur cible au moyen d'une analyse par régression ou d'un procédé de classification ; et
- utiliser la valeur cible déterminée pour la prévision, la commande et/ou le réglage du processus d'usine sidérurgique, dans lequel pour la détermination de la valeur cible, on utilise le procédé SVM (machine à vecteurs de support) et dans lequel on met à la disposition de la SVM aussi bien des valeurs d'entrée statiques que des valeurs d'entrée dynamiques.

2. Procédé selon la revendication 1, dans lequel le procédé est mis en oeuvre en temps réel.

3. Procédé selon la revendication 1 ou 2, dans lequel plusieurs valeurs d'entrée et un nombre inférieur de valeurs cibles sont mises en relation au moyen du procédé SVM.

4. Procédé selon l'une quelconque des revendications précédentes, dans lequel des résultats de modélisation du procédé SVM sont mis à disposition, de préférence pour l'élargissement de la base de données.

5. Procédé selon l'une quelconque des revendications précédentes, dans lequel un prétraitement des valeurs d'entrée est mis en oeuvre d'une manière telle que des valeurs d'entrée statiques et/ou dynamiques sont combinées, des valeurs d'entrée dynamiques sont transformées et/ou des valeurs d'entrée dynamiques, combinées et/ou transformées sont regroupées.

6. Procédé selon l'une quelconque des revendications précédentes, dans lequel des données de mesure sont soumises à des pondérations différentes pour compenser une modification continue des erreurs de mesure des données de mesure, de préférence via une pondération plus forte des données de mesure les plus actuelles.

7. Procédé selon l'une quelconque des revendications précédentes, dans lequel, pour la détermination de la teneur finale de la masse fondue en carbone, on utilise la composition des gaz d'échappement ainsi que la puissance de rayonnement de la flamme du convertisseur, à titre de valeurs d'entrée dynamiques.

8. Procédé selon l'une quelconque des revendications précédentes, dans lequel, pour la détermination de la teneur finale en phosphore et/ou de la teneur en oxyde de fer dans le laitier, on utilise le bruit au niveau du convertisseur, ainsi que les oscillations de la lance de soufflage, à titre de valeurs d'entrée dynamiques.

9. Procédé selon l'une quelconque des revendications précédentes, dans lequel, pour la détermination de la température de coulée, on utilise la température des gaz d'échappement ainsi que la perte de puissance représentée dans le système de refroidissement des gaz d'échappement, à titre de valeurs d'entrée dynamiques.

10. Procédé selon l'une quelconque des revendications précédentes, dans lequel, sur base de la valeur cible déterminée, on détermine des paramètres de fonctionnement en passant par un procédé SVM.
